# EUROPÄISCHE PATENTSCHRIFT

(11) **EP 0 450 437 B1**
(45) Veröffentlichungstag und Bekanntmachung des Hinweises auf die Patenterteilung: **07.06.1995**
(21) Anmeldenummer: 91104620.9
(22) Anmeldetag: 23.03.1991
(51) Int. Cl.: C08F 220/12, C09D 151/00, D06M 15/333, C08L 33/06, C08F 261/04

(54) **Copolymerisate auf Basis von C1-C8-Alkylacrylaten und/oder -methacrylaten, Verfahren zu ihrer Herstellung und ihre Verwendung**
Copolymers based on C1-C8-alkyl-acrylates and/or methacrylates, process for their preparation and their use
Copolymères à base de C1-C8-acrylates d'alkyle et/ou méthacrylates, procédé de leur préparation et leur utilisation

(30) Priorität: 02.04.1990 DE 4010563
(43) Veröffentlichungstag der Anmeldung: 09.10.1991
(73) Patentinhaber: BASF Aktiengesellschaft, 67063 Ludwigshafen (DE)
(72) Erfinder: Brueckmann, Ralf, Dr., W-6701 Goennheim (DE); Schoepke, Holger, Dr., W-6903 Neckargemuend (DE); Wirth, Thomas, Dr., W-6700 Ludwigshafen (DE); Hartmann, Juergen, Dr., W-6700 Ludwigshafen (DE)

(56) Entgegenhaltungen:
- EP-A- 0 144 155
- FR-A- 2 207 150
- GB-A- 1 438 449
- US-A- 4 670 505
- WORLD PATENTS INDEX LATEST Derwent Publications Ltd., London, GB; AN 88-026206 & JP-A-62 288 076
- WORLD PATENTS INDEX Derwent Publications Ltd., London, GB; AN 76-06468X & JP-B-50 039 685

## Beschreibung

Die vorliegende Erfindung betrifft Copolymerisate auf der Basis von C₁-C₈-Alkylacrylaten und/oder -methacrylaten, erhältlich durch radikalische Emulsions- oder Lösungspolymerisation von
A) 50 bis 95 Gew.-% eines C₁-C₈-Alkylacrylates und/oder -methacrylates,
B) 5 bis 20 Gew.-% einer ungesättigten Carbonsäure und/oder eines ungesättigten Carbonsäureanhydrids,
C) 0 bis 20 Gew.-% weiterer wasserlöslicher Comonomerer und
D) 0 bis 10 Gew.-% sonstiger Comonomerer in Gegenwart von
E) 2 bis 60 Gew.-Teilen Polyvinylalkohol pro 100 Gew.-Teile des Monomerengemisches aus A) bis D).

Außerdem betrifft die Erfindung die mit Alkalimetall-, Erdalkalimetall- und Ammoniumsalzen vollständig oder partiell neutralisierten Copolymerisate, ein Verfahren zur Herstellung der Copolymerisate, deren Verwendung als Mittel zum vorübergehenden Oberflächenschutz von Form-Körpern und Flächengebilden und als Schlichtemittel für die Verarbeitung von Stapelfaser- und Filamentgarnen sowie diese Schlichtemittel.

Weiterhin betrifft die Erfindung Schlichtemittel aus den beschriebenen Acrylat- und/oder Methacrylatcopolymeren, Polyvinylalkohol, üblichen Zusatzstoffen und vollständig oder partiell neutralisierte, Sulfo- und/oder Carboxylgruppen enthaltenden, in Salzform wasserlöslichen Polyestern aus nichtaromatischen C₂-C₆-Diolen und Gemischen aromatischer Dicarbonsäuren und aromatischer Tricarbonsäuren und/oder -sulfodicarbonsäuren sowie die Verwendung dieser Schlichtemittel für die Verarbeitung von Filamentgarnen.

Durch Emulsionspolymerisation in Gegenwart von Schutzkolloiden wie Polyvinylalkohol hergestellte Copolymerisate auf der Basis von Alkylacrylaten und/oder -methacrylaten mit untergeordneten Mengen weiterer Comonomerer wie ungesättigten Carbonsäuren, z.B. Acrylsäure, sind aus diversen Veröffentlichungen bekannt.

In diesen Copolymerisaten, die sich vornehmlich als Bindemittel für Dispersionsfarben und als Klebstoffe eignen, ist der Anteil der ungesättigten Carbonsäure mit maximal 5 % (GB 1 278 813) oder mit 1 % (DE-A 3 111 602) sehr gering.

Ist der Anteil der ungesättigten Carbonsäure höher, so enthalten die Copolymerisate andererseits mit maximal 7 % (US-A 3 876 596), mit maximal 5 % (US-A 4 670 505) oder mit maximal 2 % (US-A 4 265 796) nur sehr wenig Polyvinylalkohol als Schutzkolloid.

Diese Copolymerisate sind für manche Zwecke aber nur bedingt geeignet.

Aus Ullmann, Bd. 23, S. 16 (1983) sind Copolymerisate auf der Basis von Acrylat- und/oder Methacrylatcopolymeren bekannt, die als Schlichtemittel empfohlen werden.

Die beschriebenen Copolymerisate weisen jedoch ein unerwünschtes Verkleben der geschlichteten Filamentfäden auf und erfahren bei der Neutralisation einen großen Viskositätszuwachs.

Aus der JP-A-62/288076 sind Aufzeichnungsmaterialien für Tintenstrahldrucker bekannt. Die Aufzeichnungsmaterialien werden beispielsweise durch Beschichten von Folien aus Kunststoff mit einer wäßrigen Beschichtungsmasse hergestellt, die als wesentliche Bestandteile ein Pigment und einen Binder enthält. Der Binder besteht aus einem Polymer, das durch Reaktion von Polyvinyl-alkohol mit Methylmethacrylat und Acrylsäure hergestellt wird. Das Polymer enthält 3 bis 20 Gew.-% Acrylsäure und das Verhältnis von Polyvinylalkohol zu Methylmethacrylat beträgt 95 : 5 bis 10 : 90.

Aus der GB-A-1 438 449 ist die Emulsionspolymerisation von Acrylaten, Methacrylaten und Butadien in Gegenwart von hydrolysierten Vinylacetat/Alkalimetall-Olefinsulfonat-Copolymerisaten bekannt. Die Acrylate und Methacrylate können auch in Mischung mit Acrylsäure oder Methacrylsäure copolymerisiert werden. Die so erhältlichen wäßrigen Polymerdispersionen können beispielsweise als Klebstoff, Beschichtungsmittel, extilbehandlungsmittel oder Papierhilfsmittel verwendet werden.

Der vorliegenden Erfindung liegt die Aufgabe zugrunde, neue Schlichtemittel zur Verfügung zu stellen.

Die Aufgabe wird erfindungsgemäß gelöst mit der Verwendung von Copolymerisaten, die erhältlich sind durch radikalische Emulsions- oder Lösungspolymerisation von
A) 50 bis 95 Gew.-% eines C₁-C₈-Alkylacrylates und/oder -methacrylates,
B) 5 bis 20 Gew.-% einer ungesättigten Carbonsäure und/oder eines ungesättigten Carbonsäureanhydrids,
C) 0 bis 20 Gew.-% weiterer wasserlöslicher Comonomerer und
D) 0 bis 10 Gew.-% sonstiger Comonomerer
   in Gegenwart von
E) 2 bis 60 Gew.-Teilen Polyvinylalkohol pro 100 Gew.-Teile des Monomerengemisches aus A) bis D)
und die vollständig oder partiell als Alkalimetall-, Erdalkalimetall- oder Ammoniumsalze vorliegen, als Schlichtemittel für Stapelfaser- und Filamentgarne.

Weiterhin wurden Schlichtemittel aus den beschriebenen Acrylat-und/oder Methacrylatcopolymeren, Polyvinylalkohol, üblichen Zusatzstoffen und vollständig oder partiell neutralisierten Sulfo- und/oder Carboxylgruppen enthaltenden, in Salzform wasserlöslichen Polyestern aus nichtaromatischen C₂-C₆-Diolen und Gemischen aromatischer Dicarbonsäuren und aroatischer Tricarbonsäuren und/oder -Sulfodicarbonsäuren gefunden.

Die erfindungsgemäß zu verwendenden Copolymerisate werden aus 50 bis 95 Gew.-%, vorzugsweise 70 bis 80 Gew.-% eines C₁-C₈-Alkylacrylates und/oder -methacrylates als Komponente A und 5 bis 20 Gew.-% einer ungesättigten Carbonsäure als Komponente B in Gegenwart von 2 bis 60 Gew.-Teilen, vorzugsweise 10 bis 40 Gew.-Teilen Polyvinylalkohol, bezogen auf 100 Gew.-Teile A und B, hergestellt.

Außerdem können die erfindungsgemäß zu verwendenden Copolymerisate aus bis zu 20 Gew.-% weiteren wasserlöslichen Comonomeren als Komponente C und aus bis zu 10 Gew.-% sonstigen Comonomeren als Komponente D mitaufgebaut sein.

Als Komponente A eignen sich C₁-C₈-Alkylacrylate und/oder -methacrylate.

Besonders bevorzugte Komponenten A sind Methyl- und n-Butylacylat und/oder -methacrylat.

Bevorzugt sind Ethyl-, n-Propyl-, iso-Propyl-, iso-Butyl-, sec.-Butyl-, tert.-Butylacrylat bzw. -methacrylat.

Daneben sind n-Pentyl-, n-Hexyl-, 2-Ethylhexyl-, n-Heptyl- und n-Octylacrylat bzw. -methacrylat zu nennen.

Als Komponente B kommen ungesättigte Carbonsäuren in Betracht vornehmlich die Acrylsäure und Methacrylsäure.

Weiterhin eignen sich die Crotonsäure, Maleinsäure, Fumarsäure, Itaconsäure und die Anhydride der ungesättigten Carbonsäuren.

Zusätzliche wasserlösliche Comonomere als Komponente C sind vor allem Acrylamid, Methacrylamid, Allylalkohol und ganz besonders Acrylnitril und Natriumvinylsulfonat.

Für die Komponente D kommen sonstige Comonomere in Betracht, bevorzugt Vinylaromaten wie Styrol, Vinylacetat, Vinylpropionat, N-Vinylpyrrolidon und die Ester von ungesättigten Dicarbonsäuren wie der Di-n-butylester der Maleinsäure.

Die als Komponente E verwendeten Polyvinylalkohole haben vorzugsweise einen Polymerisationsgrad von 200 bis 2000 und einen Hydrolysegrad von 75 bis 99 mol-%. Die restlichen 1 bis 25 mol-% entfallen auf Acetat- oder Propionatgruppen des für die Herstellung des Polyvinylalkohols vorzugsweise verwendeten Polyvinylacetats bzw. -propionats.

Zur Herstellung einer Filamentschlichte sind Polyvinylalkohole mit einem Polymerisationsgrad von 300 bis 2000 (entsprechend einer Standardviskosität von 3 bis 25 mPa·s) und einem Verseifungsgrad von 86 bis 90 mol-% bevorzugt.

Die erfindungsgemäß zu verwendenden Copolymerisate werden durch radikalische Lösungspolymerisation, vorzugsweise durch radikalische Emulsionspolymerisation in wäßriger Lösung hergestellt.

Als Initiatoren für die radikalisch ablaufende Polymerisationsreaktion können die üblichen Peroxo- oder Azoverbindungen, auch in Kombination mit Reduktionsmitteln, zweckmäßigerweise in Mengen von 0,5 bis 2,0 Gew.-%, bezogen auf das Gewicht der Monomeren, eingesetzt werden.

Als bevorzugte Initiatoren sind Dibenzoylperoxid, tert.-Butylperpivalat, tert.-Butylper-2-ethylhexanoat, Di-tert.-butylperoxid, tert.-Butylhydroperoxid, 2,5-Dimethyl-2,5-di(tert.-butylperoxy)hexan, Cumolhydroperoxid und 4,4'-Azobisisobutyronitril zu nennen.

Bevorzugte Reduktionsmittel sind Hydrazin, Natriumsulfit, Natriumhydrogensulfit, Kaliumsulfit, Kaliumhydrogensulfit, Ammoniumsulfit und Ammoniumhydrogensulfit, die in Mengen von 0,005 bis 2,0 Gew.-% eingesetzt werden.

Bevorzugte Emulgatoren sind anionische Emulgatoren wie Laurylsulfat, p-n-Nonylphenol, p-n-Decylphenol, Natriumstearat, Kaliumoleat und vor allem C₁₅-Paraffinsulfonat. Als nichtionische Emulgatoren eignen sich vorzugsweise die Oxethylierungsprodukte des Laurylalkohols, Oleylalkohols, Stearylalkohols, Ölsäure- und Stearinamids, Oleylamids sowie der Stearin- und Ölsäure mit einem Oxethylierungsgrad von 3 bis 20. Ferner kommen auch kationische Emulgatoren wie Ammonium-, Phosphonium- und Sulfoniumverbindungen mit mindestens einer langen aliphatischen Kohlenwasserstoffkette als hydrophoben Molekülteil in Betracht.

Die für eine Emulsionspolymerisation wichtigen Emulgatoren werden in Mengen von 0,1 bis 2,0 Gew.-% eingesetzt.

Zur Steuerung der Molekularmasse können Regler zugesetzt werden. Besonders wichtig ist die Mitverwendung eines Reglers bei größeren Mengen Polyvinylalkohol, da es ohne einen Regler zur Bildung hochviskoser, nicht fließfähiger Lösungen kommen kann, die als Schlichtemittel weniger in Betracht kommen.

Bevorzugte Regler sind Tetrachlorkohlenstoff, Tetrabromkohlenstoff, Benzylbromid, Trichlorbrommethan und Butylmercaptan, die im allgemeinen in Mengen von 0,1 bis 5 Gew.-% eingesetzt werden.

Besonders gute Ergebnisse erzielt man mit tert. -Dodecylmercaptan als Regler in Mengen von 0,2 bis 1,0 Gew.-% in Kombination mit 1,0 bis 1,5 Gew.-% einer Peroxoverbindung als Initiator.

Im allgemeinen führt man die Polymerisation bei 20 bis 95°C vorzugsweise bei 65 bis 90°C durch.

Zweckmäßigerweise wird die Umsetzung bei Normaldruck vorgenommen, jedoch kann man auch bei vermindertem oder leicht erhöhtem Druck arbeiten, also etwa im Bereich von 0,5 bis 5 bar.

Die Reaktionszeiten betragen normalerweise 1 bis 5, meistens 2 bis 3 Stunden.

Verfahrenstechnisch geht man nach dem Emulsions-Zulaufverfahren in der Regel so vor, daß man eine wäßrige Lösung aus einem Teil der Initiatoren, Emulgatoren und Regler auf die Reaktionstemperatur erhitzt und die Monomeren in gleichen oder wechselnden Anteilen, vorzugsweise kontinuierlich zuführt. Es ist auch möglich, einen Teil der Monomeren bevorzugt 4 bis 20 Gew.-% mitvorzulegen, die Polymerisation zu starten und erst nach etwa 10 bis 30 Minuten mit dem Zulauf der Hauptmenge des Monomerengemisches zu beginnen.

Der Polyvinylalkohol kann zeitgleich oder zeitversetzt mit den Monomeren zugegeben werden, bevorzugt werden Mengen bis zu 10 Gew.-% in der wäßrigen Lösung vorgelegt. Die restlichen Anteile der Initiatoren, Emulgatoren und Regler werden kontinuierlich oder intermittierend zugesetzt.

Nach beendetem Zulauf setzt man die Polymerisation zweckmäßigerweise unter Zusatz weiterer Initiatormengen noch etwa für eine Zeit von 1 Stunde fort, um Restmonomerengehalte abzusenken.

Zur Herstellung der Schlichtemittel überführt man die Copolymerisate bevorzugt bei Temperaturen zwischen 50 und 85°C in ihre Natrium-, Calcium-, Magnesium-, Ammonium- oder die C₁-C₄-Alkylammoniumsalze. Im allgemeinen beträgt der Anteil der Salze mindestens 50 %.

Sollen die Schlichtemittel zur Ausrüstung von Filamentgarnen dienen, so behandelt man den wäßrigen Latex bevorzugt mit wäßrigem Ammoniak.

Stapelfaserschlichten erhält man vorzugsweise durch Zugabe von Natronlauge, Natriumcarbonat oder Natriumhydrogencarbonat zum wäßrigen Latex.

Man kann die so erhältlichen Lösungen unmittelbar oder zusammen mit weiteren Komponenten als Schlichtemittel für Polyester-, Celluloseacetat-, Polyamid-, Viskose-, Baumwolle-, Baumwolle/Polyester-, Viskose/Polyesterund für Polyester/Wolle-Fasern verwenden.

Besonders gut geeignet sind Schlichtemittel aus
a) 20 bis 60 Gew.-%, vorzugsweise 40 bis 60 Gew.-% eines definitionsgemäßen, vollständig oder partiell neutralisierten Acrylat- und/oder Methacrylatcopolymers,
b) 10 bis 40 Gew.-%, vorzugsweise 10 bis 25 Gew.-% Polyvinylalkohol mit einem bevorzugten Hydrolysegrad von 85 bis 90 mol-%,
c) 20 bis 60 Gew.-%, vorzugsweise 20 bis 50 Gew.-% eines vollständig oder partiell neutralisierten, Sulfo- und/oder Carboxylgruppen enthaltenden, in Salzform wasserlöslichen Polyesters aus einem nichtaromatischen C₂-C₆-Diol und einem Gemisch einer aromatischen Dicarbonsäure und einer aromatischen Tricarbonsäure und/oder -Sulfodiccarbonsäure und
d) 0 bis 10 Gew.-% üblicher Zusatzstoffe.

Die als Komponente c) definierten Polyester sind bekannt oder nach bekannten Methoden erhältlich (Ullmann, Bd. 23, S. 17 (1983).

Man gewinnt sie durch Kondensation von nichtaromatischen C₂-C₆-Diolen wie Diethylenglykol oder 1,4-Hydroxymethylcyclohexan und einem Gemisch einer aromatischen Dicarbonsäure wie iso-Phthalsäure oder Terephthalsäure und einer aromatischen Tricarbonsäure und/oder -Sulfodicarbonsäure wie Trimellithsäure und/oder Sulfoisophthalsäure.

Bevorzugt werden Polyester mit Molekulargewichten von 150 000 bis 250 000 und einer Säurezahl von 40 bis 60 mg Kaliumhydroxid pro Gratis Polymer eingesetzt.

Als übliche Zusatzstoffe d sind zu nennen:
- Viskositätsregulatoren wie Perborate, Wasserstoffperoxid und Harnstoff;
- Schlichtefette wie sulfatierte Fette und Öle und primäre Fettalkoholsulfate;
- Netzmittel wie sulfierte Öle, Fettalkoholsulfate und aromatische Sulfonate;
- Entschäumer wie Amide oder Ester von Fettsäuren und Silicone und
- Konservierungsmittel wie Kupfersulfat, Aluminiumalaun, Borsäure, Formaldehyd und Benzoesäure.

Weiterhin kommen Verdickungsmittel, Pigmente, Vernetzer, Füllstoffe, Verstärkungsmittel, Verfilmungshilfsmittel und Antioxidantien in Betracht.

Die erfindungsgemäßen Polymermischungen werden vorzugsweise durch Zusammengeben von Acrylat- und/oder Methacrylatcopolymeren, Polyvinylalkohol, Polyester und gegebenenfalls üblichen Zusatzstoffen als 15 bis 25 gew.-%ige Lösung hergestellt.

Die Copolymerisate und Polymermischungen gemäß der Erfindung weisen bevorzugt K-Werte von 25 bis 120, besonders 30 bis 50, auf. Der jeweils gewünschte K-Wert läßt sich in an sich bekannter Weise durch Wahl der Polymerisationsbedingungen, in erster Linie der Polymerisat onsdauer und der Initiatorkonzentration, einstellen.

Die K-Werte werden nach Fikentscher, Cellulose-Chemie, Bd. 13, S. 58 bis 64 (1932) bei 25°C in 0,5 gew.-%iger Tetrahydrofuranlösung gemessen und stellen ein Maß für das Molgewicht dar.

Die Dispersionen oder Lösungen der erfindungsgemäßen Copolymerisate und Polymermischungen weisen Feststoffgehalte von vorzugsweise 20 bis 50 Gew.-% auf, die teilneutralisierten oder neutralisierten Dispersionen oder Lösungen haben vorzugsweise Feststoffgehalte von 18 bis 25 Gew.-%.

Die erfindungsgemäßen Copolymerisate finden hauptsächlich a s Schlichtemittel für die Verarbeitung von Stapelfaser- und Filamentgarnen Verwendung, die erfindungsgemäßen Polymermischungen dienen bevorzugt als Schlichtemittel für die Verarbeitung von Mikrofasergarnen, Multifilamentgarnen und texturierten oder glatten Filamentgarnen.

Außerdem können sie zum vorübergehenden Oberflächenschutz von flächigen oder räumlichen Gebilden, beispielsweise Zeichnungen, Karte, Drucken, Fotos oder Bildern benutzt werden.

Des weiteren eignen sie sich als Papierverfestiger, Druckverdicker, Textilausrüstungsmittel und als Klebemittel.

Die Copolymerisate gemäß der Erfindung zeichnen sich durch ihre gute Schlichtewirkung bei gleichzeitig hoher Filmhärte und damit geringer Neigung zum Verkleben der geschlichteten Filamentfäden aus. Des weiteren zeigen sie hohe Klebkraftwerte sowie Mischungsstabilität und geringe Viskosität. Ein besonderer Vorteil dieser Copolymerisate ist die leichte Auswaschbarkeit vor der Weiterverarbeitung der Garne.

Die in den Beispielen angegebenen Viskositäten der Copolymerisate wurden in einem Brookfield-Viskosimeter bei 100 UpM und einer Temperatur von 20°C in wäßriger Lösung bei den jeweils angegebenen Konzentrationen gemessen.

### Beispiele

Die gemäß den Methoden a) und b) hergestellten Copolymerisate wurden nach dem Verfahren der Emulsionspolymerisation in Form wäßriger Dispersionen erhalten. Nach Zugabe einer Base löste sich das in Wasser dispergierte Copolymerisat jeweils unter Bildung klarer wäßriger Copolymerisatlösungen.

### a) Herstellung von Copolymerisaten, die vornehmlich als Stapelfaserschlichtemittel geeignet sind

In den folgenden Beispielen 1 bis 5 wurde ein Polyvinylalkool (hergestellt durch Hydrolyse von Polyvinylacetat) mit einem Hydrolysegrad von 88 mol-% und einem Polymerisationsgrad von 400 (entsprechen einer Standardviskosität - gemessen bei 20°C an 4%igen wäßrigen Lösungen - von 4 mPa·s) verwendet.

### Beispiel 1

Eine Lösung aus
842,5 g Wasser
0,36 g eines C-15-Paraffinsulfonats
1,4 g Natriumvinylsulfonat
20 g Polyvinylalkohol und
25,7 g Zulauf 2
wurde nach dem Erwärmen auf 80°C im Laufe von 2 bis 2,5 Stunden bei 85°C kontinuierlich mit den Zuläufen 1 und 2 versetzt.

### Zulauf 1

846,9 g Wasser
1,96 g eines C-15-Paraffinsulfonats
0,6 g Natriumvinylsulfonat
70 g Methacrylsäure
280 g n-Butylacrylat
115 g Methylmethacrylat
35 g Acrylnitril

### Zulauf 2

250 g Wasser
7 g Natriumpersulfat.

Danach wurde 1 Stunde nachpolymerisiert, auf 55°C abgekühlt und mit 15%iger wäßriger Natronlauge bis pH 7,4 neutralisiert.

Die erhaltene Lösung hatte einen Polymerisatgehalt von 20,6 Gew.-% und eine Viskosität von 2450 mPa·s bei 20°C.

### Beispiel 2

Dieses Copolymerisat wurde analog Beispiel 1 mit der folgenden Vorlage sowie den Zuläufen 1 und 2 hergestellt.
600,5 g Wasser
0,36 g eines C-15-Paraffinsulfonats
1,4 g Natriumvinylsulfonat
10 g Polyvinylalkohol
25,7 g Zulauf 2

### Zulauf 1

572,9 g Wasser
1,96 g eines C-15-Paraffinsulfonats
0,6 g Natriumvinylsulfonat
2 g tert.-Dodecylmercaptan
70 g Methacrylsäure
280 g n-Butylacrylat
115 g Methylmethacrylat
35 g Acrylnitril

### Zulauf 2

250 g Wasser
7 g Natriumpersulfat.

Die erhaltene Lösung hatte einen Polymerisatgehalt von 25,1 Gew.-% und bei 20°C eine Viskosität von 166 mPa·s.

### Beispiel 3

Dieses Copolymerisat wurde analog Beispiel 1 mit der nachfolgenden Vorlage sowie den Zuläufen 1 und 2 hergestellt.
842 g Wasser
0,36 g eines C-15-Paraffinsulfonats
1,4 g Natriumvinylsulfonat
20 g Polyvinylalkohol
25,5 g Zulauf 2

### Zulauf 1

839,9 g Wasser
1,96 g eines C-15-Paraffinsulfonats
0,6 g Natriumvinylsulfonat
2 g tert.-Dodecylmercaptan
70 g Methacrylsäure
280 g n-Butylacrylat
115 g Methylmethacrylat
35 g Acrylnitril

### Zulauf 2

250 g Wasser
7 g Natriumpersulfat.

Die erhaltene Lösung hatte einen Polymerisatgehalt von 21,7 Gew.-% und bei 20°C eine Viskosität von 298 mPa·s.

### Beispiel 4

Dieses Copolymerisat wurde analog Beispiel 1 mit der folgenden Vorlage sowie den Zuläufen 1 und 2 hergestellt.
832,5 g Wasser
0,36 g eines C-15-Paraffinsulfonats
1,4 g Natriumvinylsulfonat
25,7 g Zulauf 2

### Zulauf 1

896,9 g Wasser
333,3 g 30%ige wäßrige Lösung von Polyvinylalkohol
1,96 g eines C-15-Paraffinsulfonats
0,6 g Natriumvinylsulfonat
2 g tert.-Dodecylmercaptan
70 g Methacrylsäure
280 g n-Butylacrylat
115 g Methylmethacrylat
35 g Acrylnitril

### Zulauf 2

250 g Wasser
7 g Natriumpersulfat.

Die erhaltene Lösung hatte einen Polymerisatgehalt von 20,3 Gew.-% und bei 20°C eine Viskosität von 1660 mPa·s.

### Beispiel 5

Dieses Copolymerisat wurde analog Beispiel 1 mit der folgenden Vorlage sowie den Zuläufen 1 und 2 hergestellt.
400,3 g Wasser
0,2 g eines C-15-Paraffinsulfonats
0,8 g Natriumvinylsulfonat
25,4 g Zulauf 2.

### Zulauf 1

661,7 g Wasser
500 g 30%ige wäßrige Lösung von Polyvinylalkohol
1,16 g eines C-15-Paraffinsulfonats
0,4 g Natriumvinylsulfonat
1,2 g tert.-Dodecylmercaptan
42 g Methacrylsäure
168 g n-Butylacrylat
69 g Methylmethacrylat
21 g Acrylnitril

### Zulauf 1

250 g Wasser
4,2 g Natriumpersulfat.

Die erhaltene Lösung hatte einen Polymerisatgehalt von 20,5 Gew.-% und bei 20°C eine Viskosität von 1640 mPa·s.

### Anwendungstechnische Eigenschaften

Als anwendungstechnische Eigenschaften der erfindungsgemäßen Copolymerisate wurden die Filmeigenschaften und als Maß für die Schlichtewirkung die Pilling-Werte sowie die Pseudokettfadenbruch-Werte ermittelt.

### A) Bestimmung der Filmeigenschaften

Zur Ermittlung der Filmeigenschaften werden mechanische Eigenschaften wie Elastizität sowie Homogenität und Zähigkeit der Filme geprüft.

Zur Bestimmung der Filmeigenschafen wurden aus den Polymerlösungen gemäß den Beispielen 1 bis 5 2 mm dicke Folien hergestellt. Anschließend wurden diese Filme für die Dauer von 3 Stunden bei 80°C getrocknet und danach 24 Stunden bei 65 % bzw. 80 % relativer Feuchtigkeit und 20°C gehalten.

### B) Bestimmung der Schlichtewirkung durch Ermittlung

a) der Pilling-Werte und
b) der Pseudo-Kettfadenbruch-Werte

Die Prüfung der Schlichtewirkung erfolgt auf dem Reutlinger Webtester, der die Belastung der Kettgarne beim Webvorgang simuliert, indem geschlichtete Garne unter einer bestimmten Spannung mittels Metallstiften wiederholt mechanisch beansprucht werden (J. Trauter u. R. Vialon, Textil Praxis International 1985, 1201). Die Anzahl dieser Beanspruchungen, bei der eine bestimmte Schädigung des Garns festzustellen ist, stellt ein Maß für die Qualität des Schlichtemittels dar.

### Als Kriterium für die Schlichtewirkung dienen

a) die Pilling-Werte und
b) die Pseudo-Kettfadenbruch-Werte.

a) Der Pilling-Wert ist derjenige Wert, bei dem die Bildung eines Knötchens an einem bestimmten Garn zu beobachten ist.
b) Der Pseudo-Kettfadenbruch-Wert ist derjenige Wert, bei dem ein bestimmtes Garn erschlafft.

Hohe Pilling- und Pseudo-Kettfadenbruch-Werte bedeuten eine gute Schlichtewirkung.

Zur Bestimmung der Schlichtewirkung wurden Garne aus Polyester/Baumwolle im Gewichtsverhältnis 65 : 35 bei Raumtemperatur mit 15%igen Flotten der Copolymeren auf einer Laborschlichtmaschine (DE-PS 2 714 897) geschlichtet. Anschließend wurden die geschlichteten Garne für die Dauer von 24 Stunden bei 68 % relativer Feuchtigkeit und 20°C gehalter.

Die Tabelle 1 zeigt die Ergebnisse der Prüfungen A und B auf die Filmeigenschaften und die Schlichtewirkung. Die erfindungsgemäßen Copolymerisate 1 bis 5 sind vollkommen zäh, elastisch und homogen und zeigen bezüglich der Schlichtewirkung hohe Pilling- und Pseudo-Kettfadenbruch-Werte.

**Tabelle 1**

| Anwendungstechnische Eigenschaften der Copolymerisate gemäß den Beispielen 1 bis 5 | | | |
|---|---|---|---|
| Schlichtemittel | Filmeigenschaften | Schlichtewirkung | |
| | | Pilling | Pseudo-Kettfadenbruch |
| gemäß Beispiel 1 | zäh, elastisch, homogen | 4307 | 4728 |
| gemäß Beispiel 2 | zäh, elastisch, homogen | 2593 | 4028 |
| gemäß Beispiel 3 | zäh, elastisch, homogen | 2442 | 3944 |
| gemäß Beispiel 4 | zäh, elastisch, homogen | 2055 | 3250 |
| gemäß Beispiel 5 | zäh, elastisch, homogen | 2010 | 3041 |
| Zum Vergleich: | zäh, elastisch, homogen | 683 | 2336 |
| Handelsübliche Schlichte* | | | |

| | | | |
|---|---|---|---|
| * Copolymerisat aus 65 % Acrylsäure und 35 % Acrylnitril, Ammoniumsalz | | | |

### b) Herstellung von Copolymerisaten, die vornehmlich als Filamentschlichtemittel geeignet sind

In den folgenden Beispielen 6 und 7 wurde ein Polyvinylalkolol (hergestellt durch Hydrolyse von Polyvinylacetat) mit einem Hydrolysegrad von 88 mol-% und einem Polymerisationsgrad von 500 (entsprechend einer Standardviskosität - gemessen bei 20°C an 4%igen wäßrigen Lösungen - von 5 mPa·s) verwendet.

### Beispiel 6

Dieses Copolymerisat wurde analog Beispiel 1 mit der folgend in Vorlage sowie den Zuläufen 1 und 2 hergestellt. Die Neutralisation erfolgte jedoch mit 25%igem wäßrigem Ammoniak.
873,5 g Wasser
0,36 g eines C-15-Paraffinsulfonats
1,4 g Natriumvinylsulfonat
25,7 g Zulauf 2

### Zulauf 1

738,9 g Wasser
475 g 20%ige wäßrige Polyvinylalkohol-Lösung
1,96 g eines C-15-Paraffinsulfonats
0,6 g Natriumvinylsulfonat
70 g Methacrylsäure
250 g n-Butylacrylat
25 g n-Butylmethacrdylat
120 g Methylmethacrylat
15 g Styrol
20 g Acrylnitril

### Zulauf 2

250 g Wasser
7 g Natriumpersulfat.

Die erhaltene Lösung hatte einen Polymerisatgehalt von 20,7 Gew.-% und bei 20°C eine Viskosität von 1800 mPa·s.

### Beispiel 7

Dieses Copolymerisat wurde analog Beispiel 6 mit der folgenden Vorlage sowie den Zuläufen 1 und 2 hergestellt.
873,5 g Wasser
0,36 g eines C-15-Paraffinsulfonats
1,4 g Natriumsulfonat
25,7 g Zulauf 2

### Zulauf 1

945,9 g Wasser
166,6 g 30%ige wäßrige Polyvinylalkohol-Lösung
1,96 g eines C-15-Paraffinsulfonats
0,6 g Natriumvinylsulfonat
2 g tert.-Dodecylmercaptan
70 g Methacrylsäure
280 g n-Butylacrylat
115 g Methylmethacrylat
35 g Acrylnitril

### Zulauf 2

250 g Wasser
7 g Natriumpersulfat.

Die erhaltene Lösung hatte einen Polymerisatgehalt von 19,6 Gew.-% und bei 20°C eine Viskosität von 152 mPa·s.

### Anwendungstechnische Eigenschaften

Als anwendungstechnische Eigenschaften der erfindungsgemäßer Copolymerisate wurden der Fadenschluß und die Blocking-Neigung ermittelt.

### A) Bestimmung des Fadenschlusses

Der Fadenschluß ist ein Maß für die Güte einer Schlichte in bezug auf den Schutz und die Stabilisierung des Fadens. Die Bestimmung des Fadenschlusses erfolgt mit dem Shirley-Filamentcounter, indem der Filamentfaden vor und nach dem Schlichten durchgeschnitten wird und aus den beim Schneiden gezählten Impulsen die Anzahl der freien, unverklebten Einzelfilamente ermittelt wird.

Das Rohgarn besitzt einen Manra-Wert von 100, d.h. 100 % der Einzelfilamente sind unverklebt. Je niedriger der Manra-Wert, desto mehr Einzelfilamente sind an der Schnittstelle verklebt und desto besser sind der Fadenschluß sowie die Fadenhaftung und damit der erzielbare Webnutzeffekt.

Zur Bestimmung des Fadenschlusses wurden Testgarne aus Polyester-Filament, glatt, dtex 50 f 18 mit 6 % Schlichteauflage verwendet, die sowohl direkt mit dem Shirley-Filamentcounter gemessen wurden (Manra-Wert M0 in Tabelle 2), als auch vor der Messung auf dem Reutlinger Webtester 200 Beanspruchungszyklen ausgesetzt waren (Manra-Wert M200 in Tabelle 2).

Gute Klebkraftwerte und guter Fadenschluß sind bei M200-Werten unter 50 und bei einer möglichst geringen Differenz zwischen den MO- und M200-Wer-ten gegeben.

### B) Bestimmung der Blocking-Neigung

Als Blocking wird ein unerwünschtes Verkleben der geschlichieten Filamentfäden bezeichnet.

Zur Bestimmung der Blocking-Neigung wurden geschlichtete Filamentbündel mit einer Schlichteauflage von 6 bis 7 Gew.-% zwischen zwei Glasplatten von 5 x 5 cm Größe unter Druck eines aufgesetzten Gewichtes von 1 kg bei 65 % relativer Feuchtigkeit und 21°C für die Dauer von 3 Tagen gelagert.

Die Tabelle 2 zeigt die Ergebnisse der Prüfungen A und B sowie den Anteil an Polyvinylalkohol in den Copolymerisaten der Beispiele 6 und 7.

Die erfindungsgemäßen Copolymerisate 6 und 7 zeigen einen guten Fadenschluß ohne Blocking-Neigung.

**Tabelle 2**

| Anwendungstechnische Eigenschaften der Copolymerisate gemäß den Beispielen 6 und 7 | | | | |
|---|---|---|---|---|
| Schlichtemittel | PVA [%] | Fadenschluß | | Blocking |
| | | M0 | M200 | |
| gemäß Beispiel 6 | 19 | 20 | 29 | nein |
| gemäß Beispiel 7 | 10 | 15 | 33 | nein |

### c) Herstellung von Polymermischungen, die vornehmlich als Filamentschlichtemittel geeignet sind

### Einzelkomponente A

Dieses Copolymerisat wurde analog Beispiel 6 mit der folgenden Vorlage sowie den Zuläufen 1 und 2 hergestellt.
734,5 g Wasser
0,36 g eines C-15-Paraffinsulfonats
1,4 g Natriumvinylsulfonat
10,0 g Polyvinylalkohol
107,8 g Zulauf 1

### Zulauf 1

572,9 g Wasser
1,96 g eines C-15-Paraffinsulfonats
0,6 g Natriumvinylsulfonat
2,0 g tert.-Dodecylmercaptan
70,0 g Methacrylsäure
280,0 g n-Butylacrylat
115,0 g Methylmethacrylat
35,0 g Acrylnitril

### Zulauf 2

250 g Wasser
7,0 g Natriumpersulfat.

Die erhaltene Lösung hatte einen Polymerisatgehalt von 24,2 Gew.-% und bei 20°C eine Viskosität vom 110 mPa·s.

### Einzelkomponente B

Dieses Copolymerisat wurde analog Beispiel 6 mit der folgenden Vorlage sowie den Zuläufen 1 und 2 hergestellt.
873,5 g Wasser
0,36 g eines C-15-Paraffinsulfonats
1,4 g Natriumvinylsulfonat
20 g Polyvinylalkohol
138,1 g Zulauf 2

### Zulauf 1

875,9 g Wasser
1,96 g eines C-15-Paraffinsulfonats
0,6 g Natriumvinylsulfonat
2 g tert.-Dodecylmercaptan
280 g n-Butylacrylat
115 g Methylmethacrylat
35 g Acrylnitril
70 g Methacrylsäure

### Zulauf 2

250 g Wasser
7 g Natriumpersulfat.

Die erhaltene Lösung hatte einen Polymerisatgehalt von 20,1 Gew.-% und bei 20°C eine Viskosität von 128 mPa·s.

### Einzelkomponente C

Dieses Copolymerisat wurde analog Beispiel 6 mit der folgenden Vorlage sowie den Zuläufen 1 und 2 hergestellt.
873,5 g Wasser
0,36 g eines C-15-Paraffinsulfonats
1,4 g Natriumvinylsulfonat
161,7 g Zulauf 1

### Zulauf 1

945,9 g Wasser
166,6 g 30%ige wäßrige Polyvinylalkohollösung
1,96 g eines C-15-Paraffinsulfonats
0,6 g Natriumvinylsulfonat
2 g tert.-Dodecylmercaptan
280 g n-Butylacrylat
115 g Methylmethacrylat
35 g Acrylnitril
70 g Methacrylsäure

### Zulauf 2

250 g Wasser
7 g Natriumpersulfat.

Die erhaltene Lösung hatte einen Polymerisatgehalt von 19,6 Gew.-% und bei 20°C eine Viskosität von 152 mPa·s.

### Einzelkomponente D

Dieses Copolymerisat wurde analog Beispiel 6 mit der folgenden Vorlage sowie den Zuläufen 1 und 2 hergestellt.
873,5 g Wasser
0,36 g eines C-15-Paraffinsulfonats
1,4 g Natriumvinylsulfonat
174,7 g Zulauf 1

### Zulauf 1

768,9 g Wasser
475 g 20%ige wäßrige Polyvinylalkohollösung
1,96 g eines C-15-Paraffinsulfonats
0,6 g Natriumvinylsulfonat
2 g tert.-Dodecylmercaptan
280 g n-Butylacrylat
115 g Methylmethacrylat
35 g Acrylnitril
70 g Methacrylsäure

### Zulauf 2

250 g Wasser
7 g Natriumpersulfat.

Die erhaltene Lösung hatte einen Polymerisatgehalt von 20,4 Gew.-% und bei 20°C eine Viskosität von 1620 mPa·s.

### Einzelkomponente E

Dieses Copolymerisat wurde analog Beispiel 6 mit der folgenden Vorlage sowie den Zuläufen 1 und 2 hergestellt.
873,5 g Wasser
0,36 g eines C-15-Paraffinsulfonats
1,4 g Natriumvinylsulfonat
190 g Zulauf 1

### Zulauf 1

770,9 g Wasser
625 g 20%ige wäßrige Polyvinylalkohollösung
1,96 g eines C-15-Paraffinsulfonats
0,6 g Natriumvinylsulfonat
2 g tert.-Dodecylmercaptan
280 g n-Butylacrylat
115 g Methylmethacrylat
35 g Acrylnitril
70 g Methacrylsäure

### Zulauf 2

768 g Wasser
7 g Natriumpersulfat.

Die erhaltene Lösung hatte einen Polymerisatgehalt von 20,6 Gew.-% und bei 20°C eine Viskosität von 1400 mPa·s.

### Einzelkomponente F

Dieser Polyester mit -COOH-Gruppen wurde durch Kondensation von
1 Mol Diethylenglykol
0,54 Mol Cyclohexandimethanol (1,4-Hydroxymethylcyclohexan)
1,12 Mol iso-Phthalsäure
0,2 Mol Terephthalsäure
0,23 Mol Trimellithsäureanhydrid
hergestellt. Die Neutralisation erfolgte mit Ammoniak/Triethanolamin im Verhältnis 6 : 4.

### Einzelkomponente G

Dieser Polyester mit -SO₃H-Gruppen wurde durch Kondensation von
0,86 Mol Diethylenglykol
0,2 Mol Cyclohexandimethanol (1,4-Hydroxymethylcyclohexan)
0,23 Mol iso-Phthalsäure
0,70 Mol Terephthalsäure
0,13 Mol Sulfoisophthalsäure
hergestellt. Die Neutralisation erfolgte mit Natriumsalz bis zu pH 5,6.

### Beispiele 8 bis 11

Die erfindungsgemäßen Polymermischungen 8 bis 11 wurden in der Kälte in einem solchen Verhältnis aus
- Schlichtelösung aus einer der Einzelkomponenten C bis E
- Polyvinylalkohol und Wasser und
- Polyesterschlichtelösung aus einer der Einzelkomponenten F oder G
hergestellt, daß eine ca. 20 gew.-%ige Mischung mit einem Polymeranteil aus
- 21 % Polyvinylalkohol als Summe aus dem Polyvinylalkoho anteil der Einzelkomponente und separat zugesetztem Polyvinylalkohol
- 50 % Acrylat/Methacrylat-Copolymer und
- 29 % Polyester
entstand.

Als anwendungstechnische Eigenschaft der erfindungsgemäßen Polymermischungen wurden die Fadenschlußwerte ermittelt.

Die Tabelle 3 zeigt die Ergebnisse dieser Prüfung sowie die chemische Zusammensetzung in den Polymermischungen 8 bis 11. Zum Vergleich sind als Beispiele C bis G die entsprechenden Einzelkomponenten angegeben. Außerdem ist der reine Polyvinylalkohol gegenübergestellt.

Die erfindungsgemäßen Polymermischungen 8 bis 11 zeigen bessere Fadenschluß- bzw. Klebkraftwerte sowie bessere Abriebfestigkeit als die zugehörigen Einzelkomponenten.

**Tabelle 3**

| Klebkraft der erfindungsgemäßen Polymermischungen 8 bis 11 im Vergleich zu entsprechenden Einzelkomponenten | | | |
|---|---|---|---|
| Beispiel | Chemische Zusammensetzung | Fadenschluß | |
| | | M 0 | M 200 |
| C | Acrylat/Methacrylat, 10 Gew.-% PVA | 15 | 33 |
| D | Acrylat/Methacrylat, 19 Gew.-% PVA | 12 | 16 |
| E | Acrylat/Methacrylat, 25 Gew.-% PVA | 13 | 36 |
| F | Polyester mit Carboxylgruppen | 18 | 41 |
| G | Polyester mit Sulfonsäuregruppen | 15 | 18 |
| 8 | Polymermischung mit C und F | 13 | 21 |
| 9 | Polymermischung mit D und F | 10 | 13 |
| 10 | Polymermischung mit E und F | 10 | 22 |
| 11 | Polymermischung mit D und G | 15 | 25 |
| PVA (88/5) | Polyvinylalkohol (erhalten aus Polyvinylacetat) zu 88 % verseift, Viskosität (4 % in Wasser, 20°C) 5 mPa·s | 32 | >90 |

Als Vergleich zu den erfindungsgemäßen Polymermischungen wurden solche mit den Einzelkomponenten A und B gegenübergestellt. Tabelle 4 zeigt die Ergebnisse der Bestimmung der Stabilität und Viskosität der erfindungsgemäßen Polymermischungen 8, 9 und 10. Die vergleichenden Mischungen wurden aus einer der Einzelkomponente A oder B, Polyvinylalkohol und Wasser sowie der Einzelkomponente F hergestellt.

Die erfindungsgemäßen Polymermischungen 8 bis 10 sind gegenüber den Mischungen mit den Einzelkomponenten A und B mischungsstabil.

**Tabelle 4**

| Stabilität und Viskosität der erfindungsgemäßen Polymermischungen 8 bis 10 im Vergleich mit Mischungen aus Einzelkomponenten mit niedrigem Polyvinylalkoholanteil | | | |
|---|---|---|---|
| Verwendetes Methacrylat-Beispiel | Acrylat/Copolymer PVA-Gehalt [%] | Stabilität der Mischung | Viskosität der 15%igen Flotte |
| A | 2 | Trennung nach 4 Tagen | 70/ 50 |
| B | 4 | Trennung nach 7 Tagen | 80/ 50 |
| C | 10 | keine Trennung | 120/110 |
| D | 19 | keine Trennung | 235/275 |
| E | 25 | keine Trennung | 215/225 |

## Patentansprüche

1. Verwendung von Copolymerisaten, die erhältlich sind durch radikalische Emulsions- oder Lösungspolymerisation von
A) 50 bis 95 Gew.-% eines C₁-C₈-Alkylacrylates und/oder -methacrylates,
B) 5 bis 20 Gew.-% einer ungesättigten Carbonsäure und/oder eines ungesättigten Carbonsäureanhydrids,
C) 0 bis 20 Gew.-% weiterer wasserlöslicher Comonomerer und
D) 0 bis 10 Gew.-% sonstiger Comonomerer
in Gegenwart von
E) 2 bis 60 Gew.-Teilen Polyvinylalkohol pro 100 Gew.-Teile des Monomerengemisches aus A) bis D)
und die vollständig oder partiell als Alkalimetall-, Erdalkalimetall- oder Ammoniumsalze vorliegen, als Schlichtemittel für Stapelfaser- und Filamentgarne.

2. Verwendung nach Anspruch 1, dadurch gekennzeichnet, daß die Copolymerisate erhältlich sind durch radikalische Emulsions- oder Lösungspolymerisation von
A) 70 bis 80 Gew.-% eines C₁-C₈-Alkylacrylates und/oder -methacrylates,
B) 5 bis 20 Gew.-% einer ungesättigten Carbonsäure und/oder eines ungesättigten Carbonsäureanhydrids,
C) 0 bis 20 Gew.-% weiterer wasserlöslicher Comonomerer und
D) 0 bis 10 Gew.-% sonstiger Comonomerer
in Gegenwart von
E) 10 bis 40 Gew.-Teilen Polyvinylalkohol 100 pro Gew.-Teile des Monomerengemisches aus A) bis D).

3. Verwendung nach Anspruch 1 oder 2, dadurch gekenzeichnet, daß mindestens 50 % der Copolymerisate als Natrium-, Calcium-, Magnesium-, Azmonium- oder C₁- bis C₄- Alkylammoniumsalz vorliegen.

4. Schlichtemittel aus
(a) 20 bis 60 Gew.-% des nach Anspruch 1 zu verwendenden partiell oder vollständig neutralisierten Copolymerisats,
(b) 10 bis 40 Gew.-% Polyvinylalkohol,
(c) 20 bis 60 Gew.-% eines vollständig oder partiell neutralisierten, Sulfo- und/oder Carboxylgruppen enthaltenen, in Salzform wasserlöslichen Polyesters aus einem nichtaromatischen C₂-C₆-Diol und einem Gemisch einer aromatischen Dicarbonsäure und einer aromatischen Tricarbonsäure und/oder -Sulfodicarbonsäure und
(d) 0 bis 10 Gew.-% üblicher Zusatzstoffe.

5. Schlichtemittel aus
(a) 40 bis 60 Gew.-% eines nach Anspruch 3 zu verwendenden Copolymerisats,
(b) 10 bis 25 Gew.-% Polyvinylalkohol,
(c) 20 bis 50 Gew.-% eines vollständig oder partiell neutralisierten Sulfo- und/oder Carboxylgruppen enthaltenden, in Salzform wasserlöslichen Polyesters aus einem nichtaromatischen C₂-C₆-Diol und einem Gemisch einer aromatischen Dicarbonsäure und einer aromatischen Tricarbonsäure und/oder -Sulfodicarbonsäure und
(d) 0 bis 10 Gew.-% üblicher Zusatzstoffe.

6. Verwendung der Schlichtemittel gemäß Anspruch 4 oder 5 für die Verarbeitung von Mikrofasergarnen, Multifilamentgarnen und texturierten oder glatten Filamentgarnen.

## Claims

1. The use of copolymers which are obtainable by free radical emulsion or solution polymerization of
A) from 50 to 95 % by weight of a C₁-C₈-alkyl acrylate and/or methacrylate,
B) from 5 to 20 % by weight of an unsaturated carboxylic acid and/or anhydride,
C) from 0 to 20 % by weight of further water-soluble comonomers, and
D) from 0 to 10 % by weight of other comonomers
in the presence of
E) from 2 to 60 parts by weight of a polyvinyl alcohol per 100 parts by weight of the monomer mixture of A) to D)
and which are completely or partially present as alkali metal, alkaline earth metal or ammonium salts, as size for stapel fiber and filament yarns.

2. A use as claimed in claim 1, wherefor the copolymers are obtainable by free radical emulsion or solution polymerization of
A) from 70 to 80 % by weight of a C₁-C₈-alkyl acrylate and/or methacrylate,
B) from 5 to 20 % by weight of an unsaturated carboxylic acid and/or anhydride,
C) from 0 to 20 % by weight of further water-soluble comonomers, and
D) from 0 to 10 % by weight of other comonomers
in the presence of
E) from 10 to 40 parts by weight of a polyvinyl alcohol per 100 parts by weight of the monomer mixture of A) to D).

3. A use as claimed in claim 1 or 2, wherefor at least 50% of the copolymers are present as sodium, calcium, magnesium, ammonium or C₁- to C₄-alkylammonium salt.

4. A size comprising
a) from 20 to 60 % of the partially or completely neutralized copolymer to be used as claimed in claim 1,
b) from 10 to 40 % by weight of a polyvinyl alcohol,
c) from 20 to 60 % by weight of a completely or partially neutralized, sulfo- and/or carboxylcontaining polyester which is formed from a nonaromatic C₂-C₆-diol and a mixture of an aromatic dicarboxylic acid and an aromatic tricarboxylic and/or sulfodicarboxylic acid and is water-soluble in salt form, and
d) from 0 to 10 % by weight of customary additives.

5. A size comprising
a) from 40 to 60 % of a copolymer to be used as claimed in claim 3,
b) from 10 to 25 % by weight of a polyvinyl alcohol,
c) from 20 to 50 % by weight of a completely or partially neutralized, sulfo- and/or carboxylcontaining polyester which is formed from a nonaromatic C₂-C₆-diol and a mixture of an aromatic dicarboxylic acid and an aromatic tricarboxylic and/or sulfodicarboxylic acid and is water-soluble in salt form, and
d) from 0 to 10 % by weight of customary additives.

6. The use of the size of claim 4 or 5 for the processing of microfiber yarns, multifilament yarns and textured or flat filament yarns.

## Revendications

1. Utilisation de copolymères que l'on peut obtenir par la polymérisation radicalaire en émulsion ou en solution de
A) 50 à 95% d'un acrylate et/ou méthacrylate d'alkyle en C₁ à C₈,
B) 5 à 20% en poids d'un acide carboxylique insaturé et/ou d'un anhydride d'acide carboxylique insaturé
C) 0 à 20% en poids d'autres comonomères solubles dans l'eau et
D) 0 à 10% en poids d'autres comonomères,
en présence de
E) 2 à 60 parties en poids de poly(alcool vinylique) par 100 parties en poids du mélange des monomères de A) à D)
et qui se présentent totalement ou en partie sous la forme de sels de métaux alcalins, de métaux alcalinoterreux ou d'ammonium, à titre d'agents d'ensimage pour des fils de fibres courtes et filamentaires.

2. Utilisation suivant la revendication 1, caractérisée en ce que les polymères peuvent être obtenus par la polymérisation radicalaire en émulsion ou en solution de
A) 70 à 80% d'un acrylate et/ou méthacrylate d'alkyle en C₁ à C₈,
B) 5 à 20% en poids d'un acide carboxylique insaturé et/ou d'un anhydride d'acide carboxylique insaturé
C) 0 à 20% en poids d'autres comonomères solubles dans l'eau et
D) 0 à 10% en poids d'autres comonomères,
en présence de
E) 10 à 40 parties en poids de poly(alcool vinylique) par 100 parties en poids du mélange des monomères de A) à D).

3. Utilisation suivant la revendication 1 ou 2, caractérisée en ce qu'au moins 50% des copolymère se présentent sous forme de leurs sels de sodium, de calcium, de magnésium, d'ammonium, ou d'alkyl(C₁C₄)ammonium.

4. Agents ou compositions d'ensimage se composant de
(a) 20 à 60% en poids du copolymère partiellement ou totalement neutralisé à employer suivant la revendication 1,
(b) 10 à 40% en poids de poly(alcool vinylique),
(c) 20 à 60% en poids d'un polyester soluble dans l'eau, sous forme de sel, contenant des radicaux sulfo et/ou carboxyle, totalement ou partiellement neutralisé, constitué d'un diol en C₂ à C₆ non aromatique et d'un mélange d'un acide dicarboxylique aromatique et/ou d'un acide sulfodicarboxylique aromatique et
(d) 0 à 10% en poids d'additifs habituels.

5. Agents ou compositions d'ensimage se composant de
(a) 40 à 60% en poids d'un copolymère à utiliser suivant la revendication 3,
(b) 10 à 25% en poids de poly(alcool vinylique)
(c) 20 à 50% en poids d'un polyester soluble dans l'eau, sous forme de sel, contenant des radicaux sulfo et/ou carboxyle, totalement ou partiellement neutralisé, constitué d'un diol en C₂ à C₆ non aromatique et d'un mélange d'un acide dicarboxylique aromatique et/ou d'un acide sulfodicarboxylique aromatique et
(d) 0 à 10% en poids d'additifs habituels.

6. Utilisation des agents ou compositions d'ensimage suivant la revendication 4 ou 5 pour le traitement de fils en microfibres, de fils à filaments multiples et de fils filamentaires texturés ou lisses.
